(19) Europäisches Patentamt
European Patent Office
Office européen des brevets

(11) **EP 3 388 916 B1**

(12) **FASCICULE DE BREVET EUROPEEN**

(45) Date de publication et mention
de la délivrance du brevet:
**24.02.2021 Bulletin 2021/08**

(51) Int Cl.:
***G05D 1/10*** *(2006.01)*  ***G01S 11/02*** *(2010.01)*
***G08G 5/00*** *(2006.01)*  ***G08G 5/04*** *(2006.01)*

(21) Numéro de dépôt: **18161829.9**

(22) Date de dépôt: **14.03.2018**

(54) **PROCEDE DE TRANSMISSION DE PARAMETRES DE VOL D'UN AERONEF MENEUR A UN AERONEF INTRUS**

ÜBERTRAGUNGSVERFAHREN VON FLUGPARAMETERN VON EINEM ANFÜHRENDEN LUFTFAHRZEUG AN EIN EINDRINGENDES LUFTFAHRZEUG

METHOD FOR TRANSMITTING FLIGHT PARAMETERS FROM A LEADING AIRCRAFT TO AN INTRUDER AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2017 FR 1753139**

(43) Date de publication de la demande:
**17.10.2018 Bulletin 2018/42**

(73) Titulaire: **Airbus Operations S.A.S.**
**31060 Toulouse (FR)**

(72) Inventeurs:
• **ROBIN, Jean-Luc**
**31240 SAINT-JEAN (FR)**
• **HIALE-GUILHAMOU, Mathieu**
**31330 GRENADE (FR)**

(74) Mandataire: **Gicquel, Olivier Yves Gérard**
**Airbus Opérations (S.A.S)**
**XIF - M0101/1**
**316, route de Bayonne**
**31060 Toulouse Cedex (FR)**

(56) Documents cités:
**EP-A2- 2 851 889     WO-A1-2004/029902**

## Description

La présente invention concerne un procédé de transmission de paramètres de vol d'un aéronef, dit aéronef meneur, vers au moins un autre aéronef, dit aéronef intrus, afin que ledit/ledits aéronefs intrus puissent calculer précisément les positions des centres de tourbillons de sillage générés par l'aéronef meneur dans son sillage ou encore la force de circulation desdits tourbillons de sillage.

Un aéronef en vol génère dans son sillage deux tourbillons de sillage (wake vortex en terminologie anglo-saxonne). A partir des ailes, les tourbillons tendent d'abord à se rapprocher l'un de l'autre, puis à maintenir une distance plus ou moins constante entre eux tout en perdant de l'altitude par rapport à l'altitude à laquelle ils ont été générés.

La formation des tourbillons de sillage derrière un aéronef est bien connue et documentée, et la position des centres des tourbillons générés par un aéronef est en particulier obtenue via le calcul de leur vitesse de descente. Celle-ci dépend de paramètres de vol de l'aéronef tels que la masse, l'altitude, l'angle de roulis, la configuration aérodynamique, l'envergure, la densité de l'air au point de vol, la vitesse,.....

Il est intéressant pour un aéronef, dit intrus, de pouvoir calculer précisément les positions des tourbillons générés dans le sillage par un aéronef, dit meneur, afin :

- de voler en formation derrière l'aéronef meneur en profitant au maximum des vents ascendants des tourbillons afin de réduire sa consommation de carburant ; ou
- d'éviter de subir des turbulences induites par les tourbillons.

Dans une optique d'évitement des turbulences induites par les tourbillons, on connaît le document EP2851 889 qui décrit un système pour l'affichage, sur un écran du poste de pilotage d'un aéronef, d'une zone située dans le sillage de chacun des aéronefs environnants et où sont susceptibles de se trouver les tourbillons à éviter. Le système utilise les méthodes de positionnement par satellites pour positionner les aéronefs environnants, et des liaisons de données entre aéronefs pour l'échange de données afin de calculer et afficher la position des zones de turbulences générées par les aéronefs environnants.

Pour un aéronef intrus volant en formation derrière un aéronef meneur, il est intéressant de calculer la force de circulation des tourbillons de sillage générés par l'aéronef meneur pour s'installer efficacement au sein des vents ascendants des tourbillons. La force de circulation est également calculable en connaissant les paramètres de vol de l'aéronef meneur tels que la masse, l'envergure, la densité de l'air au point de vol, la vitesse,.....

De manière connue, les aéronefs proches communiquent entre eux des données de manière automatisée via notamment un dispositif d'évitement de collision actif de type TCAS (Traffic collision avoidance system : système d'alerte de trafic et d'évitement de collision). Un tel système équipant un aéronef peut surveiller jusqu'à quarante-cinq autres aéronefs volant dans un volume de surveillance du TCAS, et par conséquent, la bande passante des communications automatisées de données entre les aéronefs doit être limitée de sorte que seule l'altitude, nécessaire pour prédire un risque de collision, est échangée. Par conséquent, du fait de la limitation de la bande passante, les paramètres de vol nécessaires au calcul de la vitesse de descente des centres des tourbillons générés par l'aéronef meneur ou au calcul de la force de circulation desdits tourbillons de sillage ne peuvent être transmis à l'aéronef intrus.

Un objet de la présente invention est de répondre à ce problème et de permettre la transmission automatique (sans intervention humaine) de paramètres de vol d'un aéronef meneur vers un aéronef intrus, pour que l'aéronef intrus puisse calculer les positions des centres des tourbillons de sillage générés par l'aéronef meneur ou la force de circulation desdits tourbillons de sillage.

A cet effet, l'invention concerne un procédé de transmission de paramètre de vol tel que revendiqué dans la revendication 1 pour permettre la transmission de paramètres de vol d'un aéronef meneur à au moins un aéronef intrus L'invention concerne également un aéronef pour la mise en œuvre du procédé de transmission.

L'idée à la base de l'invention est la création d'un volume de confiance restreint, de dimensions inférieures au volume de surveillance, dans le sillage de l'aéronef meneur, dans lequel, par nature, seul un nombre restreint (au maximum 2) d'aéronefs intrus peuvent se situer.

L'échange de paramètres de vol de l'aéronef meneur uniquement vers des d'aéronefs intrus volant dans le volume de confiance de dimension restreintes permet de ne pas dépasser la capacité maximale de la bande passante de la communication automatisée.

Les caractéristiques de l'invention mentionnées ci-dessus, ainsi que d'autres, apparaîtront plus clairement à la lecture de la description suivante d'exemples de réalisation, ladite description étant faite en relation avec les figures jointes:

- la figure 1 est une représentation schématique d'un aéronef selon l'invention comprenant une pluralité de systèmes embarqués permettant la mise en œuvre d'un procédé de transmission de paramètres de vol selon l'invention, dont un système d'évitement de collision, un système de gestion de vol et un système d'autorisation d'émission de données;
- la figure 2 est une représentation schématique d'un détail des connexions entre le système d'évitement de collision, le système de gestion de vol et le système d'autorisation d'émission de données de l'aéronef de la figure 1 ;

- la figure 3 est une représentation schématique d'une formation de deux aéronefs tels qu'illustrés à la figure 1, dont un aéronef meneur générant des tourbillons de sillage et un aéronef intrus volant en formation dans le sillage de l'aéronef meneur ;
- la figure 4 est une vue similaire à la figure 3 dans laquelle l'aéronef intrus croise le sillage de l'aéronef meneur ;
- la figure 5 est une vue schématique des étapes d'un procédé de transmission de paramètres de vol selon l'invention entre un aéronef meneur et un aéronef intrus dans le cas de la figure 3 ou de la figure 4 ;
- la figure 6 est une vue similaire à la figure 1 dans laquelle l'aéronef comprend en outre un système ADS-B ; et
- la figure 7 est une vue schématique des étapes d'un procédé de transmission de paramètres de vol selon l'invention entre un aéronef meneur et un aéronef intrus comprenant chacun un système ADS-B.

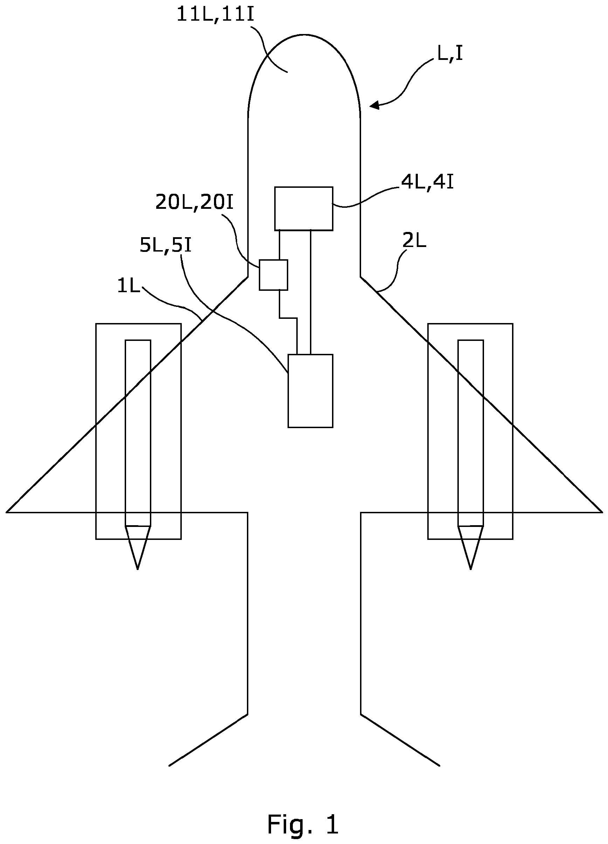

En relation avec la figure 1, un aéronef L, I comprend deux ailes 1L, 2L, et une pluralité de systèmes embarqués dans son fuselage 11L, 11I, dont un système de gestion de vol 4L, 4I de type FMS (flight management system : système de gestion de vol) et un système d'évitement de collision 5L, 5I connecté au système de gestion de vol 4L, 4I.

Le système de gestion de vol 4L, 4I de type FMS compile des paramètres de vol de l'aéronef : masse, altitude, angle de roulis, configuration aérodynamique, envergure, densité de l'air au point de vol, vitesse,....

Selon l'invention, le système de gestion de vol est capable de calculer la position de centre de tourbillons de sillage générés par un autre aéronef suite à la réception de paramètres de vol dudit autre aéronef.

En particulier, la position des centres des tourbillons générés par un aéronef est obtenue par le calcul de la vitesse de descente desdits tourbillons, de l'altitude à laquelle les tourbillons ont été générés et de la vitesse et de l'envergure de l'aéronef générant les tourbillons. La vitesse de descente Wv est, par exemple, calculée avec la relation suivante :

$$w_v = \frac{m \cdot g \cdot n_z}{2 \cdot \pi \cdot \rho \cdot V \cdot b_v^2}$$

m la masse de l'aéronef générant les tourbillons (kg)
g l'accélération de la pesanteur (9.81m/s$^2$)
$\rho$ la densité de l'air au point de vol (kg.m-3)
V la vitesse de l'aéronef générant les tourbillons (m.s-1)
bv l'espacement entre les 2 vortex (m) = envergure de l'aéronef générant les tourbillons
$\phi$ l'angle de roulis de l'aéronef générant les tourbillons (deg)
nz le facteur de charge subi par l'aéronef générant les tourbillons.

De manière connue, le système d'évitement de collision 5L, 5I avertit l'équipage de l'aéronef meneur de probabilités de collisions avec d'autres aéronefs volant dans un volume de surveillance réparti autour (sur 360°) de l'aéronef et dont les dimensions sont dépendantes de la vitesse de l'aéronef L,I.

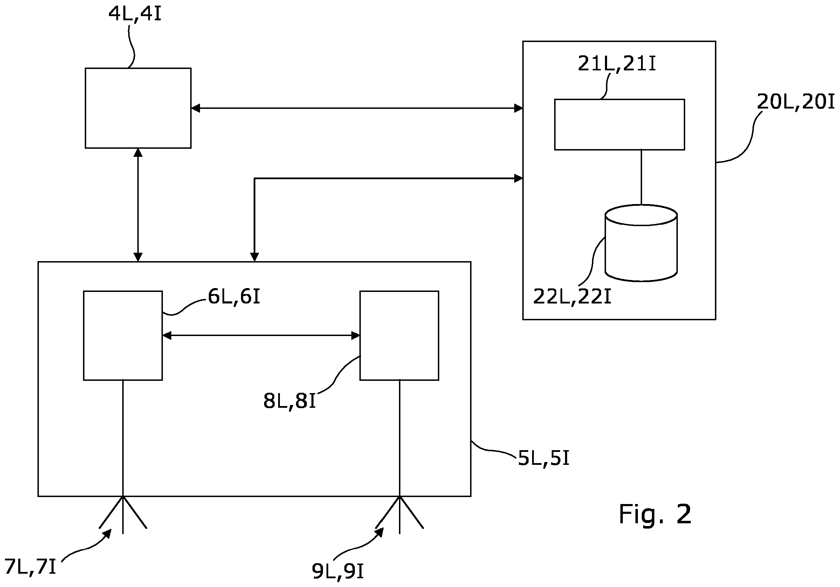

En référence avec la figure 2, le système d'évitement de collision est un dispositif actif de type TCAS (« Traffic Collision Avoidance System ») et comprend à ce titre :

- un interrogateur 6L, 6I, de type unité centrale, connecté à au moins une antenne directionnelle 7L, 71, dite antenne d'interrogateur, montée sur l'aéronef ;
- un transpondeur 8L, 8I (ou XPDR en terminologie aéronautique), de type unité centrale, connecté à au moins une antenne 9L, 9I, par exemple omnidirectionnelle, dite antenne de transpondeur, montée sur l'aéronef.
- une unité d'alerte (non représentée) usuelle, de type sonore et/ou de type visuel disposée dans le cockpit de l'aéronef; et
- une unité d'affichage (non représentée) disposée dans le cockpit de l'aéronef.

Les dimensions du volume de surveillance sont fonctions des ondes émises par l'interrogateur à une puissance prédéfinie et sous des angles prédéfinis.

Lorsque deux aéronefs convergent l'un vers l'autre, chacun muni d'un dispositif d'évitement de collision de type TCAS, chaque dispositif d'évitement de collision 5L, 5I d'un aéronef détermine la position de l'autre aéronef, dit aéronef intrus I, et estime un temps de collision avec l'aéronef intrus I. Le dispositif d'évitement de collision 5L, 5I émet une alerte de trafic informant l'équipage d'une possible future collision, ou émet un ordre de manœuvre d'évitement à l'intention de l'équipage et du système de gestion de vol 4L, 4I afin de sortir l'aéronef de la situation de possibilité de collision. Les alertes/ordres sont matérialisées par des messages vocaux émis par l'unité d'alerte et par l'affichage d'informations par l'unité d'affichage.

Selon l'invention, l'aéronef L,I comprend en outre un système d'autorisation d'émission de paramètres de vol 20L,20I connecté au système de gestion de vol 4L, 4I et au système d'évitement de collision 5L, 5I. Le système d'autorisation d'émission de paramètres de vol 20L,I est de type unité centrale et comprend de manière connue au moins un processeur 21L, 21I et des mémoires (non représentées). Une base de données 22L, 22I est enregistrée dans au moins une des mémoires.

La base de données 22L, 22I comprend des coordonnées, dans un référentiel lié à l'aéronef L,I, définissant un volume, dit volume de confiance, situé derrière l'aéronef L,I et ayant des dimensions inférieures à celles du volume de surveillance. Le volume de confiance est, par exemple, fixe et s'étend en longueur sur 2 miles nautiques (3,704 km) derrière l'aéronef, en hauteur sur 3200 pieds (975,36 m), et en largeur sur 9200 m. Les étendues en largeur et en hauteur sont réparties, respectivement, équitablement autour d'un plan médian et du plan des ailes (c.-à-d. le plan perpendiculaire au plan médian et qui sépare le fuselage de l'aéronef en une partie haute et une partie basse) de l'aéronef L,I. Avec une telle définition du volume de confiance, on estime que seul 1 ou 2 aéronefs intrus au maximum peuvent se trouver dans ledit volume de confiance.

Les mémoires comprennent également des instructions exécutées par le au moins un processeur 21L, 21I pour déterminer si la position, déterminée par le système d'évitement de collision, d'un aéronef intrus I volant à proximité de l'aéronef L-I est située dans ou hors du volume de confiance.

Enfin, les mémoires comprennent des instructions exécutées par le au moins un processeur 21L, 21I pour, tant que l'aéronef intrus se trouve dans le volume de confiance, autoriser la transmission, à l'aéronef intrus, de paramètres de vol qui permettront à ce dernier de calculer la position des tourbillons de sillage générés par l'aéronef L-I. Plus précisément, les paramètres de vol fournies par le système de gestion de vol 4L, 4I sont envoyées au moyen d'un signal émis par le transpondeur 8L,8I vers l'interrogateur de l'aéronef intrus I.

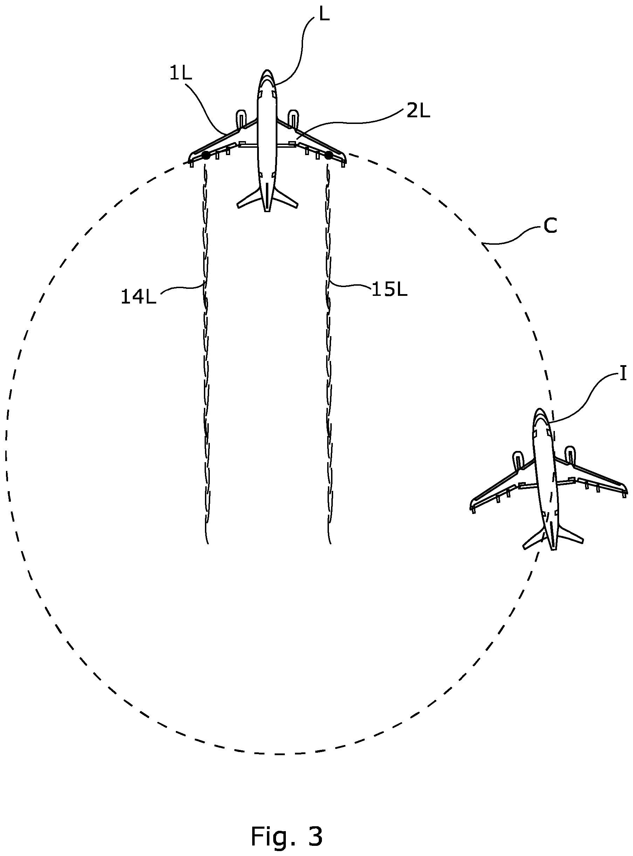

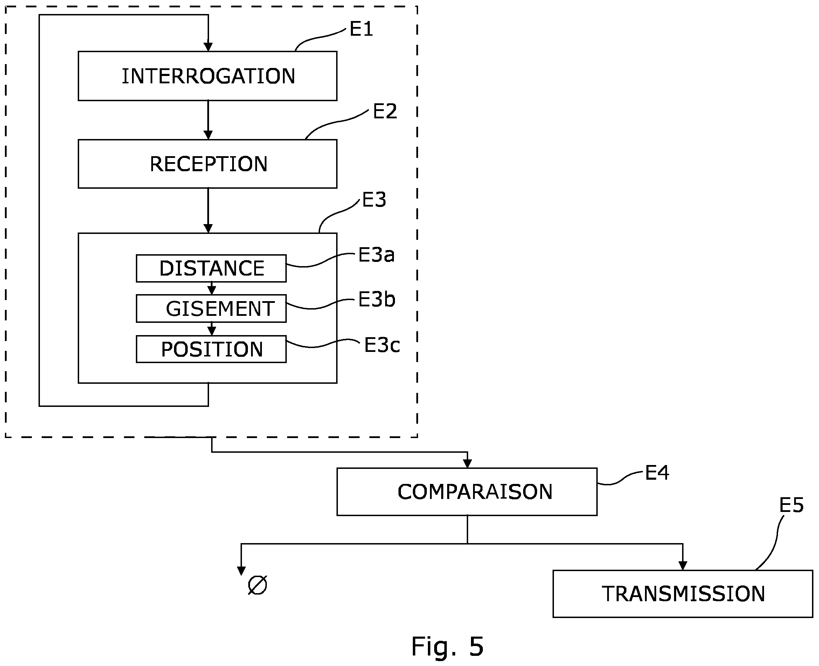

Le procédé selon l'invention va être explicité en relation avec les figures 3 à 5. On considère un aéronef L, dit aéronef meneur, générant au niveau de chacune de ses deux ailes 1L, 2L un tourbillon de sillage 14L, 15L (respectivement bâbord - tribord) et une pluralité d'aéronef intrus I volant dans le volume de surveillance de l'aéronef meneur L.

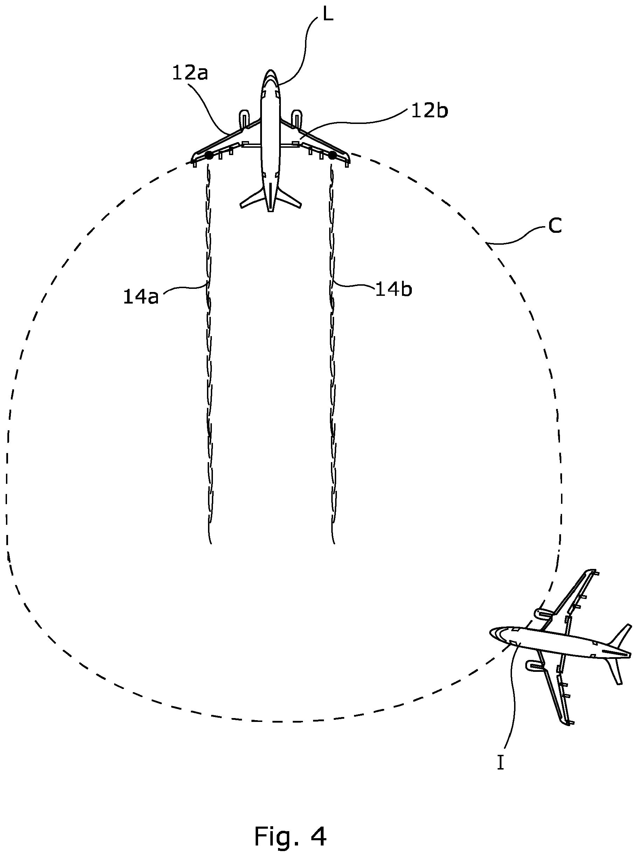

Un seul aéronef intrus I est représenté sur les figures 3 et 4 : un aéronef intrus I volant en formation derrière l'aéronef meneur L à la figure 3, ou, à la figure 4, un aéronef intrus I croisant le sillage de l'aéronef meneur L avec un cap sensiblement perpendiculaire à celui de l'aéronef meneur L.

Chacun des aéronefs meneur L ou intrus I est équipé tel que décrit plus haut en relation avec les figures 1-2. Les références portent le suffixe L pour l'aéronef meneur, ou I pour l'aéronef intrus.

Selon l'invention, la suite d'étapes suivantes est mise en œuvre au niveau de l'aéronef meneur L de manière cyclique, par exemple toutes les secondes.

- dans une étape d'interrogation E1, l'interrogateur 6L de l'aéronef meneur questionne les transpondeurs 8I des aéronefs intrus I, en envoyant, via l'antenne d'interrogateur 7L, des signaux d'interrogations sur 1030 MHz dans chacun des quatre segments d'azimut de 90°. Un signal d'interrogation contient une adresse de l'aéronef meneur L ;
- dans une étape de réception E2, chaque transpondeur 8I d'un aéronef intrus recevant le signal d'interrogation de l'aéronef meneur L répond, sur 1090 MHz, au signal d'interrogation de l'aéronef meneur L en transmettant, via l'antenne de transpondeur 9I, un signal réponse à l'adresse de l'aéronef meneur L. Le signal réponse est reçu et traité par l'interrogateur 6L de l'aéronef meneur et consiste en une série d'impulsions qui contiennent des identifiants de l'aéronef intrus I, ainsi qu'une information de l'altitude de l'aéronef intrus I ;

- dans une étape de calcul E3, l'interrogateur 6L de l'aéronef meneur 1, détermine la position, par rapport à l'aéronef meneur L, de chaque aéronef intrus I ayant répondu au signal d'interrogation. A cet effet, dans une première sous étape E3a, à partir de la différence de temps entre l'émission du signal d'interrogation et la réception d'un signal réponse, l'interrogateur 6L calcule la distance entre l'aéronef meneur L et l'aéronef intrus I. Dans une seconde sous étape E3b, l'interrogateur 6L de l'aéronef meneur, calcule le gisement (en anglais bearing) de l'aéronef intrus I par interférométrie en analysant l'onde portant le signal réponse reçue par l'antenne directionnelle 7L. Dans une troisième sous étape E3c, l'interrogateur de l'aéronef 6L meneur connaissant l'altitude, le gisement et la distance de chaque aéronef intrus I interrogé et ayant répondu, construit une carte tridimensionnelle de la position, dans le référentiel de l'aéronef meneur L, des aéronefs intrus I ayant répondus au signal d'interrogation. L'interrogateur 6L détermine s'il existe une menace de collision et réagit en conséquence comme décrit plus haut, en émettant des alertes trafic ou des ordres de manœuvre d'évitement.

La suite d'étapes d'interrogation, de réponse et de calcul (étapes E1 à E3) se produit de manière cyclique, par exemple plusieurs fois par seconde. La vitesse de chaque aéronef intrus I est calculée entre deux cycles par l'interrogateur 6L de l'aéronef meneur.

Il est à noter que la suite d'étapes d'interrogation, de réception et de calcul sont également mises en œuvre au niveau de chaque aéronef intrus I, également de manière cyclique. Durant ces étapes, le transpondeur 8L de l'aéronef meneur L interrogé par un aéronef intrus I transmet, via son antenne de transpondeur 9L, un signal réponse à l'interrogateur 6I de l'aéronef intrus, ledit signal réponse comprenant l'altitude de l'aéronef meneur L.

A la suite d'une étape E3 de calcul d'un cycle, le système d'autorisation d'émission de paramètres de vol 20L de l'aéronef meneur, dans une étape de comparaison et de détermination E4, détermine à partir de la base de données 22 si la position de chaque aéronef intrus I calculée à l'étape de calcul E3 se situe dans le volume de confiance C.

Si un aéronef intrus se situe dans le volume de confiance, dans une étape de transmission E5, le système d'autorisation d'émission de paramètres de vol 20L de l'aéronef meneur transmet une instruction au transpondeur 8L de l'aéronef meneur L pour transmettre un signal, dit signal enrichi, à l'interrogateur 6I de l'aéronef intrus.

Le contenu du signal enrichi un ou plusieurs paramètres de vol, autres que l'altitude, fournies par le système de gestion de vol de l'aéronef meneur 4L et qui permettront au système de gestion de vol 4I de l'aéronef intrus de calculer avec précision la position des centres des tourbillons 14L, 15L générés par l'aéronef meneur L.

En revanche, si l'aéronef intrus I se situe hors du volume de confiance, le système d'autorisation d'émission de paramètres de vol 20L ne transmet aucune instruction au transpondeur 8L de l' aéronef meneur.

L'étape de comparaison E4 est mise en œuvre par le système d'autorisation d'émission de paramètres de vol 20L de l'aéronef meneur à chaque nouveau cycle de la suite d'étapes d'interrogation, de réponse et de calcul (étapes E1 à E3). Par conséquent, les paramètres de vol permettant le calcul de la position des centres des tourbillons de sillage de l'aéronef meneur ne sont transmis à un aéronef intrus I que tant que ce dernier se situe dans le volume de confiance C.

L'idée à la base de l'invention est la création d'un volume de confiance restreint, de dimensions inférieures au volume de surveillance, dans le sillage de l'aéronef meneur, dans lequel, par nature, seul un nombre restreint (au maximum 2) d'aéronefs intrus peuvent se situer. Il est ainsi possible de transmettre d'autres paramètres de vol de l'aéronef meneur que l'altitude vers un nombre restreint d'aéronefs intrus identifiés comme volant dans ledit volume de confiance sans dépasser la capacité de la bande passante de la communication.

Avec la connaissance de ces paramètres de vol, le système de gestion de vol 4L de l'aéronef intrus I peut calculer précisément les positions des tourbillons 14a-b générés par l'aéronef meneur L afin :

-   de voler en formation derrière l'aéronef meneur L en profitant au maximum des vents ascendants des tourbillons afin de réduire sa consommation de carburant (cas de la figure 3) ; ou
-   d'éviter de subir des turbulences induites par les tourbillons (cas de la figure 4).

Avantageusement, afin d'optimiser davantage l'utilisation de la bande passante, le processeur 21L du système d'autorisation d'émission de paramètres de vol 20L de l'aéronef meneur (calculant la vitesse de l'aéronef intrus I calculée sur deux cycles E1-E3) détermine le temps restant à un aéronef intrus I se trouvant dans le volume de confiance C avant de sortir du volume de confiance C. Si le temps est inférieur à un temps prédéterminé (par exemple de 5 secondes), l'étape de transmission E5 n'est pas mise en œuvre par le système d'autorisation d'émission de paramètres 20L même si l'aéronef intrus I se situe encore dans le volume de confiance C.

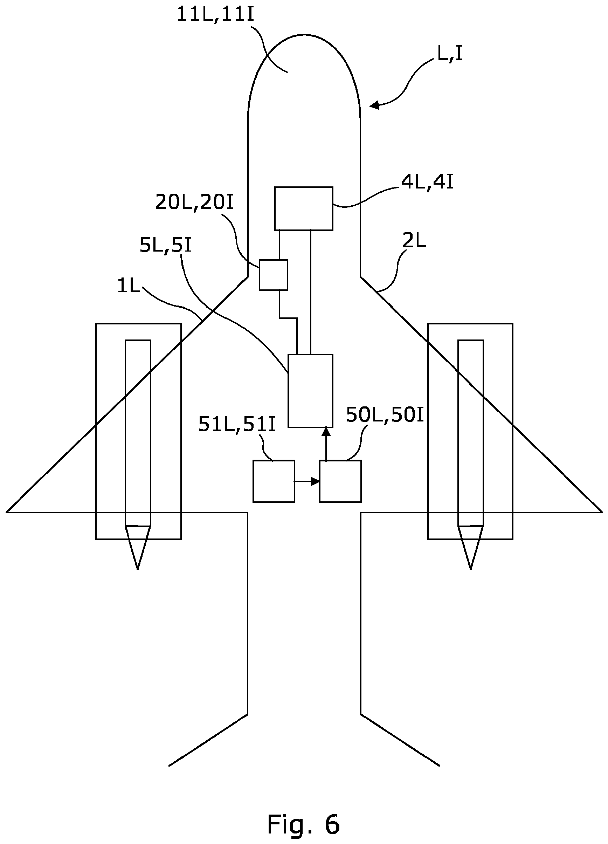

En variante, et en référence avec la figure 6, l'aéronef meneur L et l'aéronef intrus I sont chacun équipés d'un système de contrôle automatisée du trafic aérien 50L, 50I de type ADS-B (Automatic dépendent surveillance-broadcast ou système de contrôle automatisée du trafic aérien) connecté au système d'évitement de collision et à un système de positionnement par satellite 51L, 51I (non représenté sur les figures). Les messages du système de contrôle automatisée du trafic aérien 50L, 50I, émis périodiquement (par exemple toutes les secondes) et échangés entre un aéronef intrus I et un aéronef meneur M, via les transpondeurs 8L, 8I des aéronefs, contiennent les coordonnées (fournies par le système de positionnement par satellite) dans le référentiel géographique terrestre.

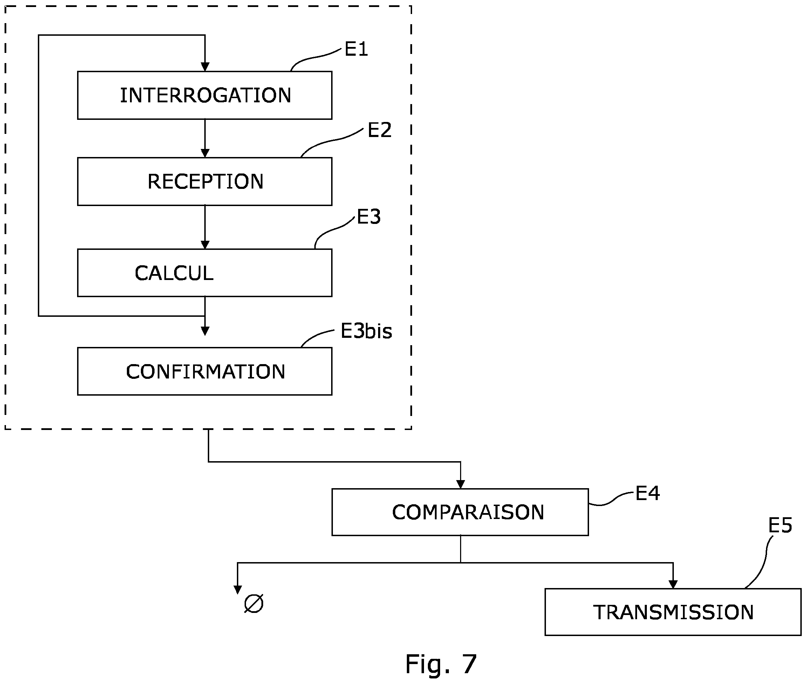

Considérant cette variante, et en référence avec la figure 7, le procédé tel que décrit plus haut est complété par une étape de confirmation, E3bis, successive à l'étape de calcul E3. Durant l'étape de confirmation E3bis, la position de l'aéronef intrus I déterminée à l'étape de calcul E3 est comparée à la position de l'aéronef intrus I donnée par la lecture du dernier message du système de contrôle automatisée du trafic aérien émis par l'aéronef intrus I. Si les positions concordent, à une marge d'erreur près, l'étape de comparaison E4 est mise en œuvre, sinon, si l'écart entre les deux positions est trop important (supérieur à 15 %), l'étape de comparaison E4 n'est pas mise en œuvre.

Cette variante est avantageuse en ce qu'elle permet de vérifier que le signal réponse de l'aéronef intrus I, reçu à l'étape de réception E2, n'est pas détourné par un individu souhaitant connaitre des paramètres de vol de l'aéronef meneur L.

Dans une variante, afin que les paramètres de vol (autres que l'altitude) de l'aéronef meneur soient uniquement disponibles à un avion intrus I volant dans la volume de confiance C, l'onde du signal enrichie est émise (à l'étape de transmission E5), par le transpondeur 8L de l'aéronef meneur, à une puissance limitée de sorte qu'elle ne puisse pas se propager au-delà d'une distance supérieure à une distance que l'aéronef meneur a déterminé à l'étape de calcul E3, à une marge d'erreur près de sorte à tenir compte de conditions de propagation l'onde défavorables.

Cette variante est avantageuse en ce qu'elle permet de vérifier que les paramètres de vol (autres que l'altitude) transmis à l'aéronef intrus, ne peuvent pas être interceptés par un individu souhaitant connaitre ces paramètres de vol de l'aéronef meneur.

Selon l'invention, le signal enrichi peut ne comprendre qu'un seul paramètre de vol, qui est dans ce cas la masse de l'aéronef meneur. En effet, il s'agit du seul paramètre de vol qui ne peut être estimé et dont la connaissance est nécessaire pour que le système de gestion de vol calcule la vitesse de descente des centres des tourbillons. Les autres paramètres de vol comme la vitesse et l'altitude de l'aéronef meneur sont quant à eux connus/déduits de la communication classique de données entre les systèmes d'évitement de collision de type TCAS. Ainsi, notamment, le transpondeur 8L d'un aéronef meneur L se trouvant dans le volume de surveillance de l'aéronef intrus, et interrogé par l'aéronef intrus I transmet, via son antenne de transpondeur 9L, un signal réponse à l'interrogateur 6I de l'aéronef intrus, ledit signal réponse comprenant l'altitude de l'aéronef meneur L.

Outre le calcul des positions des centres des tourbillons de sillage (14L, 15L) générés par l'aéronef meneur L, le système de gestion de vol d'un aéronef intrus 4I, recevant les paramètres de vol de l'aéronef meneur L, peut être configuré pour calculer d'autres caractéristiques des tourbillons de sillage générés par un aéronef meneur. Ainsi, le système de gestion de vol de l'aéronef intrus 4I peut être configuré pour calculer également la force de circulation Γ des tourbillons de sillage générés par l'aéronef meneur pour s'installer efficacement, lorsqu'il vole en formation derrière l'aéronef meneur, au sein des vents ascendants des tourbillons.

Porte ET

La force de circulation Γ est, par exemple, calculée avec la relation suivante :

$$\Gamma = \frac{m \cdot g \cdot n_z}{\rho \cdot V \cdot b_v}$$

où

m la masse de l'aéronef générant les tourbillons (kg)
g l'accélération de la pesanteur ($9.81 m/s^2$)
ρ la densité de l'air au point de vol (kg.m-3)
V la vitesse de l'aéronef générant les tourbillons (m.s-1)
bv l'espacement entre les 2 vortex (m) = envergure de l'aéronef générant les tourbillons
nz le facteur de charge subi par l'aéronef (g).

## Revendications

1. Procédé de transmission de paramètres de vol d'un aéronef meneur (L) à au moins un aéronef intrus (I) permettant audit aéronef intrus (I) de calculer les positions des centres des tourbillons de sillage (14L, 15L) générés par l'aéronef meneur (L) ou de calculer la force de circulation desdits tourbillons de sillage (14L, 15L), chaque aéronef (L,I) comprenant :

    un système d'évitement de collision (5L, 5I) configuré pour détecter des probabilités de collisions avec d'autres aéronefs volant dans un volume de surveillance réparti autour de l'aéronef (L,I), ledit système comprenant un interrogateur (6L, 6I) connecté à une antenne directionnelle (7L, 7I), dite antenne d'interrogateur, et un transpondeur (8L, 8I) ;
    un système de gestion de vol (4L, 4I) collectant les paramètres de vol de l'aéronef (L,I) ; et
    un système d'autorisation d'émission de paramètres de vol (20L) connecté au système d'évitement de collision (5L), le système d'autorisation d'émission de paramètres de vol ayant une base de données (22L) comprenant des coordonnées définissant un volume, dit volume de confiance (C), le volume de confiance étant inférieur au volume de surveillance de l'aéronef (L, I) ;
le procédé comprenant les étapes successives suivantes :

    interrogation (E1), dans laquelle l'interrogateur (6L) de l'aéronef meneur (L) émet un signal d'interrogation via l'antenne d'interrogateur (7L) dans chacun de quatre segments d'azimut de 90°, le signal d'interrogation contenant une adresse de l'aéronef meneur (L) ;
    réception (E2), dans laquelle l'interrogateur (6L) de l'aéronef meneur (L) reçoit, du transpondeur (8I) de chaque aéronef intrus (I) se trouvant dans le volume de surveillance, un signal réponse en réponse au signal d'interrogation de l'aéronef meneur (L), le signal réponse comprenant l'altitude de l'aéronef intrus (I) fournie par le système de gestion de vol (4I) de l'aéronef intrus (I);
    calcul (E3), dans laquelle l'interrogateur (6L) de l'aéronef meneur (L), détermine la position de chaque aéronef intrus (I) à partir de la différence de temps entre l'émission du signal d'interrogation et la réception du signal réponse de l'aéronef intrus (I), de l'analyse d'une onde portant ledit signal réponse intrus, et de la connaissance de l'altitude de l'aéronef intrus (I) ;

**caractérisé en ce que** le procédé comprend en outre les étapes suivantes :

    comparaison (E4), et détermination, à partir de la base de données (22L), de la position de chaque aéronef intrus (I) par rapport au volume de confiance (C) ; et
    uniquement si un aéronef intrus (I) se situe dans le volume de confiance (C), transmission (E5), par le système d'autorisation d'émission de paramètres de vol de l'aéronef meneur (50L), d'une instruction au transpondeur (8L) de l'aéronef meneur (L) pour émettre un signal, dit signal enrichi, à l'interrogateur (6I) de l'aéronef intrus (I), le signal enrichi comprenant un ou plusieurs paramètres de vols fournis par le système de gestion de vol (4L) de l'aéronef meneur (L) et permettant au système de gestion de vol (4I) de l'aéronef intrus (I) de calculer la position de centres de tourbillons de sillage (14L, 15L) générés par l'aéronef meneur (L) ou la force de circulation desdits tourbillons de sillage (14L, 15L).

2. Procédé selon la revendication 1, **caractérisé en ce qu'**un paramètre de vol de l'aéronef meneur (L) est une donnée prise parmi les données suivantes : masse de l'aéronef meneur (L), angle de roulis de l'aéronef meneur (L), configuration aérodynamique de l'aéronef meneur (L), envergure de l'aéronef meneur, densité de l'air au point de vol de l'aéronef meneur (L), vitesse de l'aéronef meneur (L).

3. Procédé selon l'une quelconque des revendications 1 à 2, l'aéronef meneur (L) et l'aéronef intrus (I) étant chacun équipés d'un système de contrôle automatisé du trafic aérien (50L, 50I), le système de contrôle automatisée du trafic aérien de l'aéronef intrus (50I) envoyant périodiquement, au système de contrôle automatisée du trafic aérien de l'aéronef meneur (50L), des messages contenant des coordonnées de l'aéronef intrus (I),
**caractérisé en ce qu'**à la suite de l'étape de calcul (E3), le système d'autorisation d'émission de paramètres de vol de l'aéronef meneur (50L), dans une étape de confirmation (E3bis),compare la position de l'aéronef intrus (I) déterminée à l'étape de calcul (E3) avec la position de l'aéronef intrus (I) donnée par la lecture du dernier message émis par l'aéronef intrus,
si l'écart entre les deux positions est supérieur à une valeur prédéterminée, l'étape de comparaison (E4) n'est pas mise en œuvre.

**Patentansprüche**

1. Verfahren zur Übertragung von Flugparametern von einem führenden Luftfahrzeug (L) zu mindestens einem eindringenden Luftfahrzeug (I), das es dem eindringenden Luftfahrzeug (I) ermöglicht, die Positionen der Zentren der vom führenden Luftfahrzeug (L) erzeugten Wirbelschleppen (14L, 15L) zu berechnen oder die Zirkulationsstärke der Wirbelschleppen (14L, 15L) zu berechnen, wobei jedes Luftfahrzeug (L, I) umfasst:

ein Kollisionsvermeidungssystem (5L, 5I), das dazu ausgestaltet ist, Kollisionswahrscheinlichkeiten mit anderen Luftfahrzeugen, die in einem um das Luftfahrzeug (L, I) herum verteilten Überwachungsraum fliegen, zu detektieren, wobei das System einen Interrogator (6L, 6I), der mit einer Richtstrahlantenne (7L, 7I), Interrogator-Antenne genannt, verbunden ist, und einen Transponder (8L, 8I) umfasst;
ein Flugmanagementsystem (4L, 4I), das die Flugparameter des Luftfahrzeugs (L, I) erfasst;

und
ein Flugparametersendegenehmigungssystem (20L), das mit dem Kollisionsvermeidungssystem (5L) verbunden ist, wobei das Flugparametersendegenehmigungssystem eine Datenbank (22L) aufweist, die Koordinaten umfasst, welche einen Raum, Konfidenzraum (C) genannt, definieren, wobei der Konfidenzraum kleiner als der Überwachungsraum des Luftfahrzeugs (L, I) ist;
wobei das Verfahren die folgenden aufeinander folgenden Schritte umfasst:

Abfrage (E1), bei welcher der Interrogator (6L) des führenden Luftfahrzeugs (L) ein Abfragesignal über die Interrogator-Antenne (7L) in jedem von vier 90°-Azimutsegmenten sendet, wobei das Abfragesignal eine Adresse des führenden Luftfahrzeugs (L) enthält;
Empfang (E2), bei dem der Interrogator (6L) des führenden Luftfahrzeugs (L) vom Transponder (8I) jedes eindringenden Luftfahrzeugs (I), das sich im Überwachungsraum befindet, ein Antwortsignal als Antwort auf das Abfragesignal des führenden Luftfahrzeugs (L) empfängt, wobei das Antwortsignal die Höhe des eindringenden Luftfahrzeugs (I) umfasst, die vom Flugmanagementsystem (4I) des eindringenden Luftfahrzeugs (I) bereitgestellt wird;
Berechnung (E3), bei welcher der Interrogator (6L) des führenden Luftfahrzeugs (L) die Position jedes eindringenden Luftfahrzeugs (I) anhand des Zeitunterschieds zwischen dem Senden des Abfragesignals und dem Empfang des Antwortsignals des eindringenden Flugzeugs (I), der Analyse einer das eindringende Antwortsignal tragenden Welle und der Kenntnis der Höhe des eindringenden Luftfahrzeugs (I) bestimmt;

**dadurch gekennzeichnet, dass** das Verfahren ferner die folgenden Schritte umfasst:

Vergleichen (E4) und Bestimmen, anhand der Datenbank (22L), der Position jedes eindringenden Luftfahrzeugs (I) in Bezug auf den Konfidenzraum (C); und
nur dann, wenn sich ein eindringendes Luftfahrzeug (I) im Konfidenzraum (C) befindet, Übertragen (E5), durch das Flugparametersendegenehmigungssystem des führenden Luftfahrzeugs (50L), einer Anweisung an den Transponder (8L) des führenden Luftfahrzeugs (L), um ein Signal, erweitertes Signal genannt, an den Interrogator (6I) des eindringenden Luftfahrzeugs (I) zu senden, wobei das erweiterte Signal einen oder mehrere Flugparameter umfasst, die vom Flugmanagementsystem (4L) des führenden Luftfahrzeugs (L) bereitgestellt werden, und es dem Flugmanagementsystem (4I) des eindringenden Luftfahrzeugs (I) ermöglicht, die Position von Zentren von vom führenden Luftfahrzeug (L) erzeugten Wirbelschleppen (14L, 15L) oder die Zirkulationsstärke der Wirbelschleppen (14L, 15L) zu berechnen.

2. Verfahren nach Anspruch 1, **dadurch gekennzeichnet, dass** ein Flugparameter des führenden Luftfahrzeugs (L) ein Datenwert ist, der den folgenden Datenwerten entnommen wird: Masse des führenden Luftfahrzeugs (L), Rollwinkel des führenden Luftfahrzeugs (L), aerodynamische Konfiguration des führenden Luftfahrzeugs (L), Spannweite des führenden Luftfahrzeugs, Luftdichte am Flugpunkt des führenden Luftfahrzeugs (L), Geschwindigkeit des führenden Luftfahrzeugs (L).

3. Verfahren nach einem der Ansprüche 1 bis 2, wobei das führende Luftfahrzeug (L) und das eindringende Luftfahrzeug (I) jeweils mit einem automatisierten Luftverkehrsüberwachungssystem (50L, 50I) ausgestattet sind, wobei das automatisierte Luftverkehrsüberwachungssystem des eindringenden Luftfahrzeugs (50I) an das automatisierte Luftverkehrsüberwachungssystem des führenden Luftfahrzeugs (50L) periodisch Nachrichten sendet, die Koordinaten des eindringenden Luftfahrzeugs (I) enthalten, **dadurch gekennzeichnet, dass** das Flugparametersendegenehmigungssystem des führenden Luftfahrzeugs (50L) nach dem Rechenschritt (E3) in einem Bestätigungsschritt (E3bis) die im Rechenschritt (E3) bestimmte Position des eindringenden Luftfahrzeugs (I) mit der durch das Lesen der letzten vom eindringenden Luftfahrzeug gesendeten Nachricht gegebenen Position des eindringenden Luftfahrzeugs (I) vergleicht, wenn die Abweichung zwischen den beiden Positionen über einem vorbestimmten Wert liegt, der Vergleichsschritt (E4) nicht ausgeführt wird.

**Claims**

1. Method for transmitting flight parameters from a leading aircraft (L) to at least one intruder aircraft (I) allowing said intruder aircraft (I) to calculate the positions of the centres of the wake vortices (14L, 15L) generated by the leading aircraft (L) or to calculate the force of circulation of said wake vortices (14L, 15L), each aircraft (L, I) comprising:

     a collision avoidance system (5L, 5I) configured to detect probabilities of collisions with other aircraft flying within a surveillance volume distributed about the aircraft (L, I), said system comprising an interrogator (6L, 61) connected to a directional antenna (7L, 7I), called interrogating antenna, and a transponder (8L, 81);
a flight management system (4L, 41) collecting the flight parameters of the aircraft (L, I); and
a flight parameter transmission authorization system (20L) connected to the collision avoidance system (5L), the flight parameter transmission authorization system having a database (22L) comprising coordinates defining a volume, called confidence volume (C), the confidence volume being smaller than the surveillance volume of the aircraft (L, I);
the method comprising the following successive steps:

     interrogation (E1), in which the interrogator (6L) of the leading aircraft (L) transmits an interrogation signal via the interrogating antenna (7L) in each of four 90° azimuth segments, the interrogation signal containing an address of the leading aircraft (L);
reception (E2), in which the interrogator (6L) of the leading aircraft (L) receives, from the transponder (8I) of each intruder aircraft (I) located within the surveillance volume, a response signal in response to the interrogation signal from the leading aircraft (L), the response signal comprising the altitude of the intruder aircraft (I) supplied by the flight management system (4I) of the intruder aircraft (I);
calculation (E3), in which the interrogator (6L) of the leading aircraft (L) determines the position of each intruder aircraft (I) from the time difference between the transmission of the interrogation signal and the reception of the response signal from the intruder aircraft (I), from the analysis of a wave carrying said intruder response signal, and from the knowledge of the altitude of the intruder aircraft (I);

**characterized in that** the method further comprises the following steps:

     comparison (E4), and determination, from the database (22L), of the position of each intruder aircraft (I) with respect to the confidence volume (C); and
only if an intruder aircraft (I) is situated within the confidence volume (C), transmission (E5), by the flight parameter transmission authorization system of the leading aircraft (50L), of an instruction to the transponder (8L) of the leading aircraft (L) to transmit a signal, called enriched signal, to the interrogator (6I) of the intruder aircraft (I), the enriched signal comprising one or more flight parameters supplied by the flight management system (4L) of the leading aircraft (L) and allowing the flight management system (4I) of the intruder aircraft (I) to calculate the position of centres of wake vortices (14L, 15L) generated by the leading aircraft (L) or the force of circulation of said wake vortices (14L, 15L).

2. Method according to Claim 1, **characterized in that** a flight parameter of the leading aircraft (L) is a datum taken from among the following data: weight of the leading aircraft (L), roll angle of the leading aircraft (L), aerodynamic configuration of the leading aircraft (L), wing span of the leading aircraft, density of the air at the flight point of the leading aircraft (L), speed of the leading aircraft (L).

3. Method according to either one of Claims 1 and 2, the leading aircraft (L) and the intruder aircraft (I) being each equipped with an automated air traffic control system (50L, 50I), the automated air traffic control system of the intruder aircraft (50I) sending periodically, to the automated air traffic control system of the leading aircraft (50L), messages containing coordinates of the intruder aircraft (I), **characterized in that**, following the calculation step (E3), the flight parameter transmission authorization system of the leading aircraft (50L), in a confirmation step (E3bis), compares the position of the intruder aircraft (I) determined in the calculation step (E3) with the position of the intruder aircraft (I) given by reading the last message transmitted by the intruder aircraft, if the difference between the two positions is greater than a predetermined value, the comparison step (E4) is not implemented.

11L,11I

L,I

4L,4I

20L,20I

5L,5I

2L

1L

Fig. 1

Fig. 2

Fig. 3

Fig. 4

EP 3 388 916 B1

```
                    ┌─────────────────────────┐
                    │         ↓               │  ╭─ E1
                    │  ┌──────────────┐        │
                    │  │ INTERROGATION │       │
                    │  └──────────────┘        │
                    │         ↓          ╭─ E2 │
                    │  ┌──────────────┐        │
                    │  │   RECEPTION  │        │
                    │  └──────────────┘        │
                    │         ↓           ╭─ E3│
                    │  ┌──────────────┐        │
                    │  │ ┌──────────┐ │ ─ E3a  │
                    │  │ │ DISTANCE │ │        │
                    │  │ └──────────┘ │        │
                    │  │      ↓    ─ E3b       │
                    │  │ ┌──────────┐ │        │
                    │  │ │ GISEMENT │ │        │
                    │  │ └──────────┘ │        │
                    │  │      ↓       │─ E3c   │
                    │  │ ┌──────────┐ │        │
                    │  │ │ POSITION │ │        │
                    │  │ └──────────┘ │        │
                    │  └──────────────┘        │
                    └─────────────────────────┘
                              ↓
                    ┌──────────────────┐  ╭─ E4
                    │   COMPARAISON    │
                    └──────────────────┘
                      ↓              ↓        ╭─ E5
                      ∅         ┌──────────────┐
                                │ TRANSMISSION │
                                └──────────────┘
```

Fig. 5

Fig. 6

Fig. 7

**EP 3 388 916 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2851889 A